# EUROPÄISCHE PATENTANMELDUNG

(11) **EP 4 803 851 A1**
(43) Veröffentlichungstag der Anmeldung: **09.09.2026**
(21) Anmeldenummer: 25162407.8
(22) Anmeldetag: 07.03.2025
(51) Int. Cl.: G01B 7/14

(54) **VERFAHREN UND VORRICHTUNG ZUM BESTIMMEN EINES ACHSABSTANDS**

(71) Anmelder: Waagenbau Dohmen GmbH, 52146 Würselen (DE)
(72) Erfinder: Dohmen, Marvin, 52531 Übach-Palenberg (DE); Dohmen, Peter, 52477 Alsdorf (DE); Dohmen, Martin, 52477 Alsdorf (DE); Dohmen, Torsten, 52146 Würselen (DE)
(74) Vertreter: Bauer PSU PartG mbB

(57) **Zusammenfassung**

Offenbart ist ein Verfahren zum Bestimmen eines Achsabstands (6) von zwei Achsen (8) eines Fahrzeugs (2), wobei ein erster Sensor (18) an einer ersten Messstelle (17) und ein an einer zweiten Messstelle (19) in Fahrtrichtung (7) in einem Grenzabstand (27) dahinter angeordneter zweiter Sensor jeweils im Überfahren der ersten Messstelle (17) und der zweiten Messstelle (19) bei jeder der Achsen (8) auslösen und der Achsabstand (6) anhand der Auslösungen der Sensoren (18, 20) bestimmt wird. Offenbart ist weiter eine Vorrichtung (5) mit einer hierzu eingerichteten Auswerteeinheit.

Vorgeschlagen wird, dass der Achsabstand (6) nur und genau dann als kleiner als der Grenzabstand (27) bestimmt wird, wenn die zweite der Auslösungen durch den ersten Sensor (18) erfolgt.

## Beschreibung

Die Erfindung betrifft ein Verfahren zum Bestimmen eines Achsabstands von zwei Achsen eines Fahrzeugs, wobei ein erster Sensor an einer ersten Messstelle und ein an einer zweiten Messstelle in Fahrtrichtung in einem Grenzabstand dahinter angeordneter zweiter Sensor jeweils im Überfahren der ersten Messstelle und der zweiten Messstelle bei jeder der Achsen auslösen und der Achsabstand anhand der Auslösungen der Sensoren bestimmt wird. Die Erfindung betrifft weiter eine Vorrichtung mit einer hierzu eingerichteten Auswerteeinheit.

Die rechtlich zulässige Last eines Fahrzeugs und auf dessen einzelnen Achsen ist abhängig von der Anzahl der Achsen und deren Achsabständen. Die Kontrolle des Fahrzeuggewichts und der Achslasten muss diese Faktoren berücksichtigen.

Bekannte Verfahren und Vorrichtungen zum Bestimmen von Achsabständen eines vorbeifahrenden Fahrzeugs erfordern eine Kombination aus Sensoren und/oder Bildaufzeichnungen, Datenverarbeitung und -analyse. An Messstellen neben der Fahrbahn angebrachte Hochgeschwindigkeitskameras, Radar- oder LiDAR-Sensoren oder in der Fahrbahn eingelassene Induktionsschleifen oder Drucksensoren lösen beim Überfahren jeder der Messstellen bei jeder einzelnen Achse aus. Aus den Zeitpunkten der Auslösungen und der Geschwindigkeit des Fahrzeugs wird der jeweilige Achsabstand berechnet. Jede Beschleunigung oder Verzögerung des Fahrzeugs zwischen den Auslösungen sowie Verschmutzungen, Wind oder Fehlauslösungen beispielsweise durch Schmutzlappen führen in einem der bekannten Verfahren zu Messunsicherheit und fehlerhaften Messungen.

Im Hintergrund der Erfindung ist bekannt, dass bei der Kontrolle der zulässigen Last eines Fahrzeugs und auf dessen einzelnen Achsen keine exakte Messung des Achsabstands, sondern nur die Angabe des Bereichs zwischen den zwei rechtlich vorgegebenen Grenzabständen heranzuziehen ist, zwischen denen der Achsabstand liegt.

### Aufgabe

Der Erfindung liegt die Aufgabe zugrunde, den Achsabstand unabhängig von der Geschwindigkeit zu bestimmen.

### Lösung

Ausgehend von den bekannten Verfahren wird nach der Erfindung vorgeschlagen, dass der Achsabstand nur und genau dann als kleiner als der Grenzabstand bestimmt wird, wenn die zweite der Auslösungen durch den ersten Sensor erfolgt.

Beim Vorbeifahren von zwei aufeinanderfolgenden Achsen löst notwendig mit der ersten Achse immer zuerst der erste und dann der zweite Sensor aus. Die Auslösung des ersten Sensors mit der zweiten Achse erfolgt einerseits immer erst nach dessen Auslösung mit der ersten Achse. Andererseits erfolgt sie nur und genau dann vor Auslösung des zweiten Sensors mit der ersten Achse, wenn der Achsabstand zwischen beiden Achsen kleiner als der Grenzabstand zwischen dem ersten und dem zweiten Sensor ist. Ist der Achsabstand größer als der Grenzabstand, dann löst der zweite Sensor vorher aus. Die Auslösung des zweiten Sensors vor der zweiten Auslösung des ersten ist notwendig und hinreichend für die Bestimmung eines Achsabstands, die größer ist als der Grenzabstand. Das erfindungsgemäße Verfahren reduziert auf dieser Grundlage die gegenüber dem Stand der Technik notwendige Datenverarbeitung und - analyse auf das Speichern von höchstens drei Ereignissen und das Auslesen genau eines dieser Ereignisse. Das Ergebnis des erfindungsgemäßen Verfahrens ist anders als im Stand der Technik keine exakte Messung, sondern eine auf den Grenzabstand bezogene Fallunterscheidung.

Vorzugsweise werden in einem erfindungsgemäßen Verfahren die Auslösungen der Sensoren chronologisch erfasst. Ein solches erfindungsgemäßes Verfahren reduziert die gegenüber dem Stand der Technik notwendige Datenerfassung auf die Reihenfolge des Eintritts von höchstens drei Ereignissen.

Vorzugsweise wird der Achsabstand mit unterschiedlichen Grenzabständen jeweils gemäß einem erfindungsgemäßen Verfahren bestimmt und durch logische Kombination der Ergebnisse in Abstandsklassen zwischen den Grenzabständen klassifiziert. Die mehrfache Anwendung des erfindungsgemäßen Verfahrens mit den rechtlich vorgegebenen Werten für die Grenzabstände ergibt den Bereich zwischen denjenigen Grenzabständen, zwischen denen der Achsabstand liegt.

Vorzugsweise sind bei solchen erfindungsgemäßen Verfahren die zweiten Sensoren in dem jeweiligen Grenzabstand hinter einem für das Bestimmen mit jedem der Grenzabstände gemeinsamen ersten Sensor angeordnet. Die Anzahl der für die Klassifizierung erforderlichen Sensoren wird so auf fast die Hälfte reduziert. Zur Klassifizierung des Achsabstands ist es dann insbesondere ausreichend, die Auslösungen der zweiten Sensoren ohne weitere Differenzierung der zweiten Sensoren vor einer gegebenen Falls zweiten Auslösung des ersten Sensors zu zählen.

Vorzugsweise sind bei solchen erfindungsgemäßen Verfahren die Grenzabstände 1 *m*, 1,3 *m*, 1,4 *m* und 1,8 *m*. Die erfindungsgemäßen Verfahren erlauben dann eine Bestimmung der zulässigen Achslast einer Achsgruppe (Doppel-, Drei- oder Mehrfachachslast) durch Klassifizierung des Achsabstands entsprechend § 34 der deutschen Straßenverkehrs-Zulassungs-Ordnung (StVZO) in der Fassung nach Änderung durch Artikel 1 der Verordnung vom 10. Juni 2024 (BGBI. 2024 I Nr. 191).

Ausgehend von den bekannten Vorrichtungen wird nach der Erfindung vorgeschlagen, dass die Auswerteeinheit eingerichtet ist, den Achsabstand nur und genau dann als kleiner als der Grenzabstand zu bestimmen, wenn die zweite der Auslösungen durch den ersten Sensor erfolgt ist. Die erfindungsgemäße Vorrichtung erlaubt die Ausführung eines erfindungsgemäßen Verfahrens und zeichnet sich gleichermaßen durch deren vorgenannte Vorteile aus.

Vorzugsweise sind in einer erfindungsgemäßen Vorrichtung die Sensoren in eine von dem Fahrzeug befahrene Fahrbahn eingelassen und lösen beim Überfahren der Achsen aus. In die Fahrbahn eingelassene Sensoren sind besonders gut vor Witterungseinflüssen, Manipulation und Beschädigung geschützt. Alternativ können die Sensoren auch neben der Fahrbahn angebracht sein. Für beide Varianten sind verschiedene Arten von Sensoren allgemein bekannt.

Vorzugsweise sind in einer solchen erfindungsgemäßen Vorrichtung die Sensoren an die Fahrbahn quer überspannenden Schienen angebracht. Eine solche erfindungsgemäße Vorrichtung vermeidet eine Fehlmessung durch an den Sensoren seitlich vorbeifahrende Achsen.

Vorzugsweise sind in einer solchen erfindungsgemäßen Vorrichtung die Sensoren druckempfindlich. Solche Sensoren sind in Form von Piezo-Elementen oder Druckmessdosen (DMS) allgemein bekannt und sowohl robust als auch preisgünstig. Alternativ können die Sensoren die Änderung eines elektrischen Wechselfelds durch eine vorbeifahrende Achse erfassen, insbesondere durch eine Induktionsschleife.

Vorzugsweise ist eine erfindungsgemäße Vorrichtung in eine Waagenplattform zum Bestimmen eines Gesamtgewichts und/oder von Achslasten eines mehrachsigen Fahrzeugs integriert. Beim Überfahren einer solchen Waagenplattform kann dann zugleich automatisch bestimmt werden, ob das Gesamtgewicht und/oder die Achslasten gesetzlich zulässig sind.

### Ausführungsbeispiele

Die Erfindung wird nachfolgend anhand von Ausführungsbeispielen erläutert. Es zeigen
- Fig. 1: eine erfindungsgemäße Waagenplattform und
- Fig. 2: einen Schnitt durch die Waagenplattform.

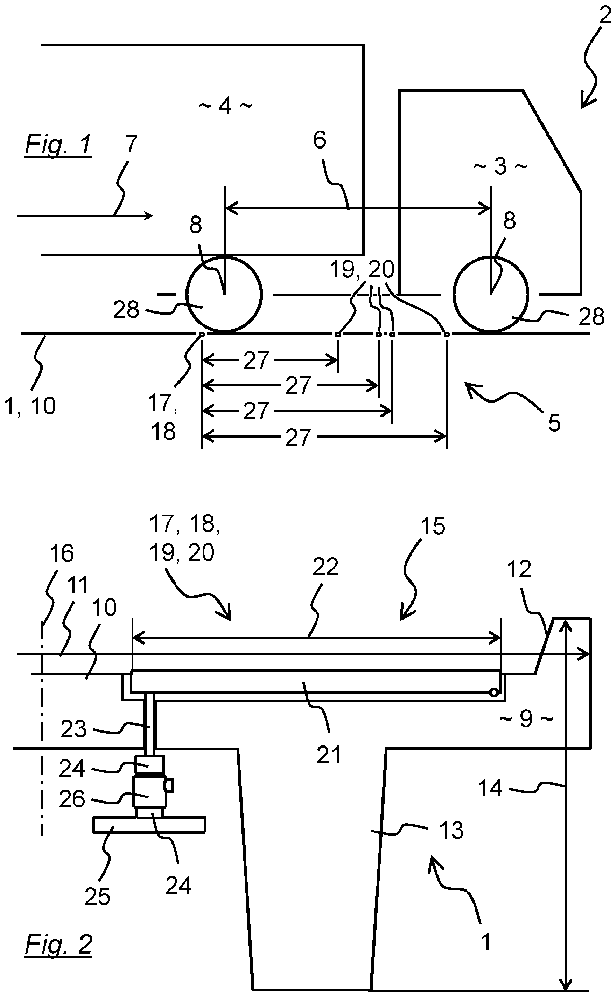

Die in Figur 1 gezeigte erfindungsgemäße Waagenplattform 1 dient zum Bestimmen von Gesamtgewicht und Achslasten mehrachsiger Fahrzeuge 2, hier: eines Sattelzugs mit einer zweiachsigen Zugmaschine 3 und einem Auflieger 4 und weist vier erfindungsgemäße Vorrichtungen 5 zum Bestimmen eines Achsabstands 6 von zwei in Fahrtrichtung 7 hintereinander angeordneten Achsen 8 des Fahrzeugs 2, hier zunächst der Achsen 8 der Zugmaschine 3, und ermöglicht so eine automatische Beurteilung, ob die gemessenen Lasten gesetzlich zulässig sind.

Die in Figur 2 im Schnitt quer zu der Fahrtrichtung 7 gezeigte Waagenplattform 1 zum Einbau in eine nicht dargestellte Straße weist auf einem Träger 9 aus Stahlbeton eine Fahrbahn 10 mit einer nicht dargestellten Länge von 10 m in der Fahrtrichtung und einer Breite 11 von 3,2 m auf. Entlang der Fahrbahn 10 weist der Träger 9 seitlich je ein Schrammbord 12 und einen statisch stabilisierenden Sturz 13 in eine Tiefe 14 von 1,15 m auf.

In einer Spur 15 der Fahrbahn 10 sind versetzt zur Fahrbahnmitte 16 in einer ersten Messstelle 17 ein den Vorrichtungen 5 gemeinsamer erster Sensor 18 und in zweiten Messstellen 19 vier mit diesem identische zweite Sensoren 20 der Vorrichtungen 5 eingelassen. Die Sensoren 18, 20 weisen jeweils ein in der Fahrbahn 10 federnd gelagertes Stahlprofil 21 mit einer Länge 22 von 0,95 m auf. Das Stahlprofil 21 weist ein 4-Kantprofil mit einer Kantenlänge von 60 x 20 *mm.*

Unter dem Stahlprofil 21 ist jeweils ein Stift 23 durch den Träger 9 hindurchgeführt, der bei Belastung des Stahlprofils 21 senkrecht auf eine in Druckstücken 24 auf einer stählernen Lagerplatte 25 pendelnd gelagerte Druckmessdose 26 drückt.

In der Fahrtrichtung 7 sind die zweiten Sensoren 20 im Grenzabstand 27 von 1, 1,3, 1,4 und 1,8 m der jeweiligen Vorrichtung 5 von dem allen Vorrichtungen 5 gemeinsamen ersten Sensor 18 angebracht. Die Sensoren 18, 20 sind über Kabel mit einer Auswerteeinheit verbunden. Die Kabel und die Auswerteeinheit sind nicht dargestellt.

Die an den Achsen 8 angebrachten luftbereiften Räder 28 des Fahrzeugs 2 liegen nicht punktförmig, sondern in einer nicht dargestellten Aufstandsfläche auf der Fahrbahn 10 auf. Die Sensoren 18, 20 lösen aus, sobald sie innerhalb der Aufstandsfläche eines der Räder 28 liegen, genauer: wenn der über die Aufstandsfläche ausgeübte Druck einen Grenzwert, insbesondere von 50 kg übersteigt.

Zur Klassifizierung des Achsabstands 6 wird die Auswerteeinheit durch die erste Auslösung des ersten Sensors 18 aktiviert, zählt die Auslösungen der zweiten Sensoren 20 in den vier Vorrichtungen 5 und beendet die Messung jeweils mit der nächsten Auslösung des ersten Sensors 18. Die Auswerteeinheit klassifiziert den Achsabstand 6 dann anhand der Anzahl der Auslösungen der zweiten

Sensoren 20 innerhalb einer Messung wie folgt:

| | |
|---|---|
| 0 Auslösungen: | Achsabstand 6 < 1 m |
| 1 Auslösungen: | 1 m ≤ Achsabstand 6 < 1,3 m |
| 2 Auslösungen: | 1,3 m ≤ Achsabstand 6 < 1,4 m |
| 3 Auslösungen: | 1,4 m ≤ Achsabstand 6 < 1,8 m |
| 4 Auslösungen: | Achsabstand 6 ≥ 1,8 m |

Achsabstände zu möglichen folgenden Achsen klassifiziert die Auswerteeinheit entsprechend anhand der Anzahl der weiteren Auslösungen der zweiten Sensoren 20 jeweils bis zur nächsten Auslösung des ersten Sensors 18.

§ 34 der deutschen Straßenverkehrs-Zulassungs-Ordnung (StVZO) in der Fassung nach Änderung durch Artikel 1 der Verordnung vom 10. Juni 2024 (BGBI. 2024 I Nr. 191) definiert abhängig von dieser Klassifizierung die für verschiedene Typen von Fahrzeugen 2 zulässigen Achslasten. Unter anderen rechtlichen Rahmenbedingungen werden die zweiten Sensoren 20 gegebenen Falls in abweichender Zahl und/oder mit abweichenden Grenzabständen hintereinander angeordnet.

Zur Auswertung der Messungen mit den erfindungsgemäßen Vorrichtungen 5 benötigt die Auswerteeinheit lediglich ein Zählwerk für die Auslösungen der zweiten Sensoren 20 zwischen je zwei Auslösungen des ersten Sensors 18.

In einer nicht dargestellten zweiten erfindungsgemäßen Vorrichtung ist die in Fahrtrichtung erste Messstelle der Beginn der Waagenplattform und der erste Sensor ist die Waagenplattform selbst. Eine Auslösung des ersten Sensors wird registriert, wenn das von der Waagenplattform gemessene Gewicht das Auffahren einer Achse anzeigt, genauer: wenn der über die Aufstandsfläche auf die Waagenplattform ausgeübte Druck um mehr als einen Grenzwert ansteigt, insbesondere um mehr als 50 kg.

In einer gleichfalls nicht dargestellten dritten erfindungsgemäßen Vorrichtung ist die in Fahrtrichtung letzte Messtelle das Ende der Waagenplattform und der letzte zweite Sensor ist wiederum die Waagenplattform selbst. Eine Auslösung des letzten zweiten Sensors wird registriert, wenn das von der Waagenplattform gemessene Gewicht das Abfahren einer Achse anzeigt, genauer: wenn der über die Aufstandsfläche auf die Waagenplattform ausgeübte Druck um mehr als einen Grenzwert abfällt, insbesondere um mehr als 50 kg.

### In den Figuren sind

- 1: Waagenplattform
- 2: Fahrzeug
- 3: Zugmaschine
- 4: Auflieger
- 5: Vorrichtung
- 6: Achsabstand
- 7: Fahrtrichtung
- 8: Achse
- 9: Träger
- 10: Fahrbahn
- 11: Breite
- 12: Schrammbord
- 13: Sturz
- 14: Tiefe
- 15: Spur
- 16: Fahrbahnmitte
- 17: erste Messstelle
- 18: erster Sensor
- 19: zweite Messstelle
- 20: zweiter Sensor
- 21: Stahlprofil
- 22: Länge
- 23: Stift
- 24: Druckstück
- 25: Lagerplatte
- 26: Druckmessdose
- 27: Grenzabstand
- 28: Rad

## Patentansprüche

1. Verfahren zum Bestimmen eines Achsabstands (6) von zwei Achsen (8) eines Fahrzeugs (2), wobei ein erster Sensor (18) an einer ersten Messstelle (17) und ein an einer zweiten Messstelle (19) in Fahrtrichtung (7) in einem Grenzabstand (27) dahinter angeordneter zweiter Sensor jeweils im Überfahren der ersten Messstelle (17) und der zweiten Messstelle (19) bei jeder der Achsen (8) auslösen und der Achsabstand (6) anhand der Auslösungen der Sensoren (18, 20) bestimmt wird, ***dadurch gekennzeichnet, dass*** der Achsabstand (6) nur und genau dann als kleiner als der Grenzabstand (27) bestimmt wird, wenn die zweite der Auslösungen durch den ersten Sensor (18) erfolgt.

2. Verfahren nach dem vorgenannten Anspruch, ***dadurch gekennzeichnet*, *dass*** die Auslösungen chronologisch erfasst werden.

3. Verfahren zum Klassifizieren eines Achsabstands (6) von zwei Achsen (8) eines Fahrzeugs (2), wobei der Achsabstand (6) mit unterschiedlichen Grenzabständen (27) jeweils gemäß dem vorgenannten Anspruch bestimmt und durch logische Kombination der Ergebnisse in Abstandsklassen zwischen den Grenzabständen (27) klassifiziert wird.

4. Verfahren nach dem vorgenannten Anspruch, ***gekennzeichnet durch*** einen gemeinsamen ersten Sensor (18) für das Bestimmen mit jedem der Grenzabstände (27), wobei die zweiten Sensoren (20) in dem jeweiligen Grenzabstand (27) hinter dem gemeinsamen ersten Sensor (18) angeordnet sind.

5. Verfahren nach einem der Ansprüche 3 und 4, ***dadurch gekennzeichnet, dass*** die Grenzabstände (27) 1 *m*, 1,3 *m*, 1,4 *m* und 1,8 *m* sind.

6. Vorrichtung (5) zum Bestimmen eines Achsabstands (6) von zwei Achsen (8) eines Fahrzeugs (2), wobei die Vorrichtung (5) einen ersten Sensor (18) an einer ersten Messstelle (17) und an einer zweiten Messstelle (19) in einem Grenzabstand (27) zu diesem in Fahrtrichtung (7) des Fahrzeugs (2) einen zweiten Sensor, die jeweils im Überfahren der ersten Messstelle (17) und der zweiten Messstelle (19) bei jeder der Achsen (8) auslösen, umfasst, sowie eine Auswerteeinheit, die eingerichtet ist, den Achsabstand (6) anhand der Auslösungen der Sensoren (18, 20) zu bestimmen, ***dadurch gekennzeichnet, dass*** die Auswerteeinheit eingerichtet ist, den Achsabstand (6) nur und genau dann als kleiner als der Grenzabstand (27) zu bestimmen, wenn die zweite der Auslösungen durch den ersten Sensor (18) erfolgt ist.

7. Vorrichtung (5) nach dem vorgenannten Anspruch, ***dadurch gekennzeichnet, dass*** die Sensoren (18, 20) in eine von dem Fahrzeug (2) befahrene Fahrbahn (10) eingelassen sind und beim Überfahren der Achsen (8) auslösen.

8. Vorrichtung (5) nach dem vorgenannten Anspruch, ***dadurch gekennzeichnet, dass*** die Sensoren (18, 20) an die Fahrbahn (10) quer überspannenden Schienen angebracht sind.

9. Vorrichtung (5) nach einem der Ansprüche 6 bis 8, ***dadurch gekennzeichnet, dass*** die Sensoren (18, 20) druckempfindlich sind.

10. Waagenplattform (1) zum Bestimmen eines Gesamtgewichts und/oder von Achslasten eines mehrachsigen Fahrzeugs (2) mit einer Vorrichtung (5) nach einem der Ansprüche 6 bis 9.
